# EUROPEAN PATENT SPECIFICATION

(11) **EP 2 281 429 B1**
(45) Date of publication and mention of the grant of the patent: **22.08.2012**
(21) Application number: 10170701.6
(22) Date of filing: 23.07.2010
(51) Int. Cl.: A01D 34/68

(54) **An engagement mechanism with a brake**
Einrastmechanismus mit Bremse
Mécanisme d'engagement avec frein

(30) Priority: 06.08.2009 IT RE20090083
(43) Date of publication of application: 09.02.2011
(73) Proprietor: Emak S.p.A., 42011 Bagnolo in Piano (Reggio Emilia) (IT)
(72) Inventor: Bigi, Salvatore, 42011, Bagnolo in Piano (Reggio Emilia) (IT)
(74) Representative: Corradini, Corrado

(56) References cited:
- US-A- 3 228 177
- US-A- 3 367 459
- US-A- 3 570 637
- US-A- 3 581 481
- US-A- 4 058 957
- US-A- 4 213 288

## Description

The invention relates to garden lawn mowers comprising a rotating blade turning inside an inferiorly-open casing, with the blade facing the soil to be worked.

The casing is mounted on a frame equipped with a wheel, which frame is fitted with an activating motor, normally an internal combustion engine. Transmission of rotation to the rotating blade is via a belt positioned between a first drive pulley keyed onto the shaft of the motor and a second driven pulley keyed onto the shaft of the rotating blade.

A chain stretcher, the position of which is controlled by the operator, is positioned along a branch of the belt.

When the operator moves the stretcher to tension the belt, the blade is rotated, and when the operator wishes to suspend the transmission of motion of the blade he positions the stretcher away from the belt, which thus loosens and does not transmit motion from the drive pulley to the driven pulley.

When this happens the blade continues to rotate by force of inertia and it is therefore necessary to stop it for safety reasons.

In the prior art the blade is stopped by means of a brake shoe acting on the exterior of the transmission belt on the stretch of belt wrapped around the driven pulley. This leads to a series of drawbacks.

The first drawback is the precocious wear on the belt, which is not built to endure the friction of the brake shoe on its external surface.

Another drawback arises from the fact that the friction of the brake shoe on the belt is not always adequate for an effective braking action.

A further drawback derives from the difficulty in coordinating the action of the brake with the engagement/disengagement action of the belt drive.

Document US 4 058 957 discloses an engagement system for lawnmowers comprising internally of a casing supported by a frame of the machine, a rotating blade on a shaft of which a driven pulley is keyed, a drive pulley keyed onto a shaft of a motor, a belt transmitting drive between the drive pulley and the driven pulley and a belt stretcher. An arm is pivotally connected to the frame of the machine and carries on one end the belt stretcher and on another end a connection to a brake shoe. A neutral position of the arm is defined in which the brake is located at a braking position and the stretcher in a non-engaged relation with the belt. A first spring urges arm from the neutral position into a drive position so as to engage the driven pulley with the stretcher for the belt to remove slack therefrom. A second spring is used to maintain the arm in the neutral position and a shaft operable by an operator is provided to unlock a cam follower from an end of a slot to unlock the arm which is then brought by the first spring into the drive position.

The aim of the present intention is to obviate the above-cited drawbacks and to make available a drive transmission system in a rotating-blade lawn mower of the kind described herein above, in which the engagement and disengagement of the motion transmitted to the blade are synchronised to the respective disengagement and engagement of the brake, in the ambit of a simple, relatively economical and reliable construction.

The aim is attained by the invention thanks to a system exhibiting the characteristics recited in the first independent claim.

The dependent claims relate to characteristics aimed at improving the results of the invention, in the ambit of the solution recited in the independent claim.

In substance the invention comprises a three-arm lever, hinged to a pin which is parallel to the shaft of the rotating blade, and supported by the frame.

A first arm of the lever bears the chain stretcher rotating idle on a pin that is parallel to the shaft of the blade.

A second arm of the lever, substantially aligned with the first arm, bears a brake shoe.

A third arm of the lever, substantially perpendicular to the first two, is connected to elastic means which keep the brake shoe pressed into contact with a special metal drum that is coaxial and solidly constrained to the shaft of the rotating blade.

A suitable transmission system that can be operated by an operator, for example a sheathed wire, rotates the lever against the action of the elastic means in order to pull the brake shoe away from the drum and at the same time place the stretcher in contact with the belt.

The advantages and constructional and functional characteristics of the invention will emerge from the detailed description that follows, illustrated by the figures of the drawings and relating to a preferred embodiment of the invention, given by way of non-limiting example.

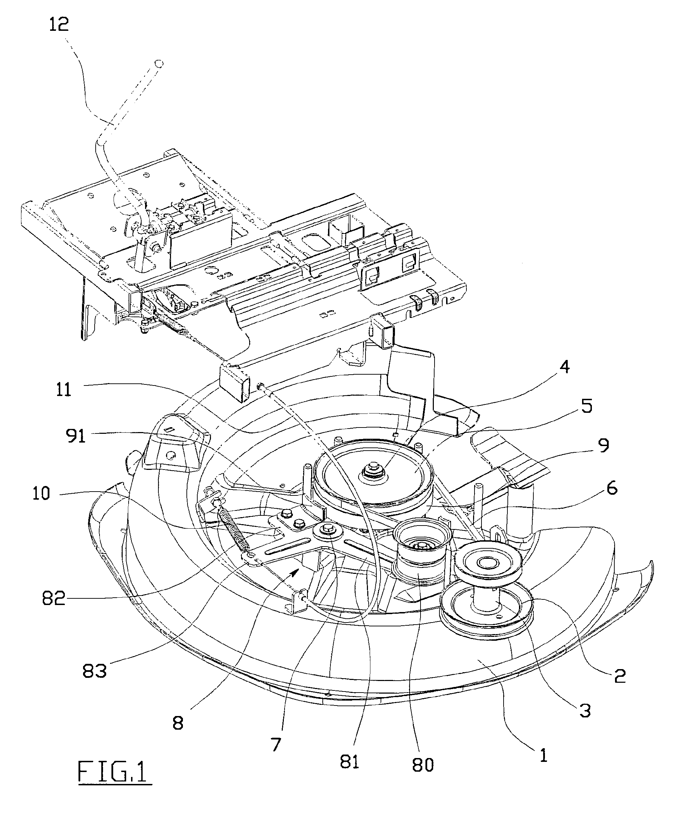

Fig.1 illustrates the invention in a perspective view.

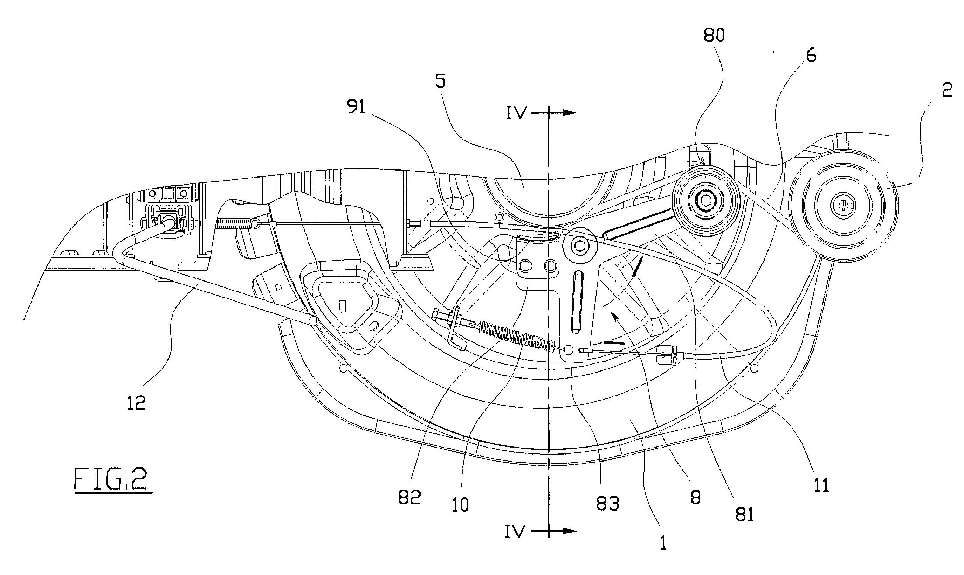

Fig.2 illustrates the invention in partial plan view.

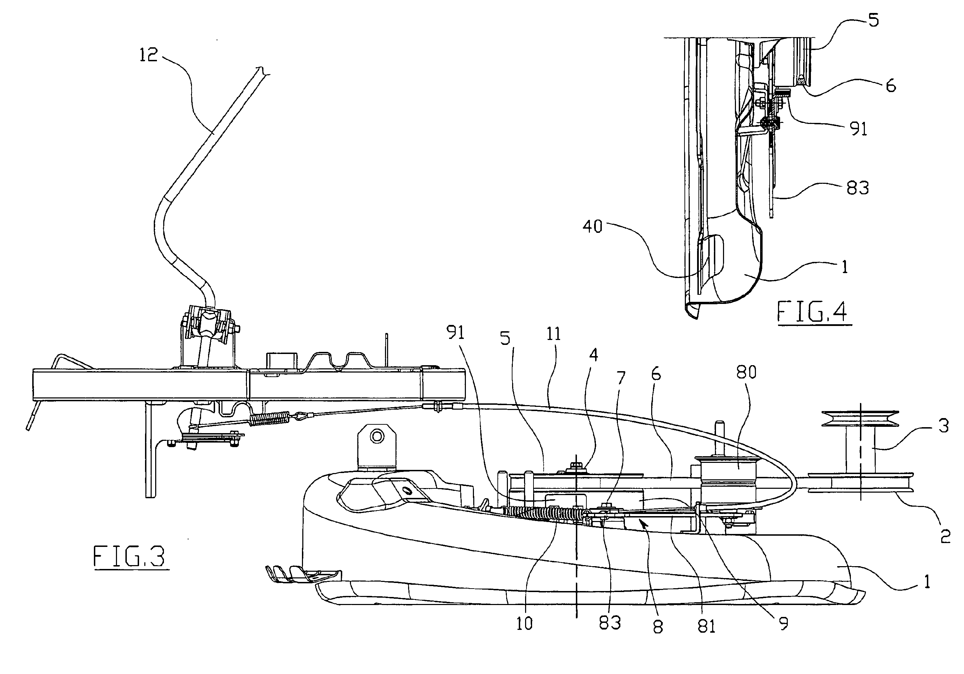

Fig.3 illustrates a lateral view of the invention.
Fig.4 is section IV-IV of Fig.2.

The figures do not illustrate the frame fitted with wheels bearing the internal combustion engine of which only the motion exit shaft is visible.

The parts not shown are well known to experts in the sector.

The figures of the drawings show the casing 1 protecting the blade and supporting the drive pulley 2 keyed onto the shaft 3 of the motor (not shown). The blade 40 rotates solidly with the shaft 4 thereof, on which the driven pulley 5 is keyed.

The drum 9 of the brake is keyed onto the shaft 4 below the driven pulley 5. The transmission belt 6, advantageously trapezoidal, is positioned between the pulleys 2 and 5.

The casing supports a pin 7 located parallel and laterally of the shaft 4, on which the lever 8 is freely rotatably hinged.

The lever 8 exhibits a first arm 81 at an end of which the idle stretcher 80, positioned coplanar with the pulleys 2 and 5, is fitted, while the belt 6 runs externally of the idle stretcher 80.

The lever 8 exhibits a second arm 82, substantially aligned with and positioned opposite the arm 81, said second arm 82 bearing the shoe 91 positioned at the drum 9.

In proximity of the pin 7, the lever 8 comprises an activating arm 83, substantially perpendicular to the first two arms 81 and 82, an end of which is connected by a spring 10 to a fixed point of the casing so that the lever 8 maintains the shoe 91 elastically pressed against the drum 9.

A sheathed wire 11, departing from the activating lever 12 located in an accessible position to the operator, enables the lever 8 to be rotated in order to overcome the action of the spring 10.

The operation of the device is obvious.

Normally the spring 10 keeps the blade 40 braked and the stretcher 80 distanced from the belt.

By activating the lever 12 the operator overcomes the spring 10 action and presses the stretcher 80 against the belt 6, setting the blade 40 in motion.

At the same time the brake shoe 91 is distanced from the drum 9.

If for any reason the operator should need to let go of the lever 12, the spring 10 will instantly disengage the drive transmission to the blade, and will operate the brake.

The invention is not limited to the example described herein, and variants and improvements thereto can be applied without its forsaking the ambit of the following claims.

## Claims

1. An engagement system for lawnmowers comprising, internally of a casing (1) supported by a frame of the machine, a rotating blade (40) on a shaft (4) of which a driven pulley (5) is keyed, a drive pulley (2) keyed onto a shaft (3) of a motor, a belt (6) transmitting drive between the drive pulley (2) and the driven pulley (5), a belt stretcher (80) supported by a lever (8) pivoting on a pin (7) parallel to the axis of the driven pulley (5) and maintained elastically against the belt (6); a metal drum (9) which is coaxial of and solidly constrained to the shaft (4) of the blade (40), a brake shoe (91) positioned at an end of the lever (8) opposite to the stretcher (80), a single elastic mean (10) being provided to keep simultaneously the brake shoe (91) pressed against the drum (9) and the stretcher (80) away from the belt (6), means for distancing the brake shoe (91) from the drum (9) and for placing the stretcher (80) in contact with the belt (6) being provided, **characterized in that** the brake shoe (91) is fixedly connected on an arm (82) of the lever (8).

2. The system of claim 1, **characterised in that** the lever (8) exhibits an activating arm (83) which is connected to the casing (1) via a spring.

3. The system of claim 1, **characterised in that** the activating arm (83) of the lever (8) is connected by a mechanical transmission to a lever (12) activatable by an operator.

4. The system of claim 3, **characterised in that** the mechanical transmission is a sheathed wire (11).

## Patentansprüche

1. Einklinksystem für Rasenmäher, im Inneren eines Gehäuses (1), getragen von einem Rahmen der Maschine, ein sich drehendes Messer (40) auf einer Welle (4) umfassend, auf die eine angetriebene Riemenscheibe (5) gespannt ist, eine Antriebsriemenscheibe (2), die auf eine Welle (3) eines Motors gespannt ist, einen Riemen (6), der zwischen der Antriebsriemenscheibe (2) und der angetriebenen Riemenscheibe (5) Antriebskraft überträgt, einen Riemenspanner (80), der von einem Schwenkhebel (8) getragen wird, der sich parallel zur Achse der angetriebenen Riemenscheibe (5) auf einem Stift (7) dreht und elastisch gegen den Riemen (6) gehalten wird, eine Metalltrommel (9), die koaxial zur Welle (4) des Messers (40) liegt und darauf festgespannt ist, einen Bremsschuh (91), der an einem Ende des Schwenkhebels (8) gegenüber dem Spanner (80) angeordnet ist, wobei ein einzelnes elastisches Mittel (10) dafür bereitgestellt ist, gleichzeitig den Bremsschuh (91) an die Trommel (9) gepresst und den Spanner weg vom Riemen (6) zu halten, wobei Mittel bereitgestellt sind, um den Bremsschuh (91) von der Trommel (9) zu beabstanden und um den Spanner (80) in Kontakt mit dem Riemen (6) zu bringen, **dadurch gekennzeichnet, dass** der Bremsschuh (91) fest mit einem Arm (82) des Schwenkhebels (8) verbunden ist.

2. System nach Anspruch 1, **dadurch gekennzeichnet, dass** der Schwenkhebel (8) einen Betätigungsarm (83) aufweist, der über eine Feder mit dem Gehäuse (1) verbunden ist.

3. System nach Anspruch 1, **dadurch gekennzeichnet, dass** der Betätigungsarm (83) des Schwenkhebels (8) durch eine mechanische Übertragung mit einem Hebel (12) verbunden ist, der von einem Bediener betätigt werden kann.

4. System nach Anspruch 3, **dadurch gekennzeichnet, dass** die mechanische Übertragung ein ummanteltes Kabel (11) ist.

## Revendications

1. Système de mise en prise pour tondeuses à gazon comprenant, à l'intérieur d'un boîtier (1) supporté par un châssis de la machine, une lame rotative (40) sur un arbre (4) dont une poulie entraînée (5) est clavetée, une poulie d'entraînement (2) clavetée sur un arbre (3) d'un moteur, une courroie (6) transmettant l'entraînement entre la poulie d'entraînement (2) et la poulie entraînée (5), un tendeur de courroie (80) supporté par un levier (8) pivotant sur une goupille (7) parallèle à l'axe de la poulie entraînée (5) et maintenu par une force élastique contre la courroie (6) ; un tambour métallique (9) coaxial et fermement maintenu sur l'arbre (4) de la lame (40), un sabot de frein (91) positionné à une extrémité du levier (8) opposée au tendeur (80), un moyen élastique unique (10) étant pourvu pour maintenir simultanément le sabot de frein (91) pressé contre le tambour (9) et le tendeur (80) écarté de la courroie (6), un moyen pour éloigner le sabot de frein (91) du tambour (9) et pour placer le tendeur (80) en contact avec la courroie (6) pourvue, **caractérisé en ce que** le sabot de frein (91) est connecté de manière fixe sur un bras (82) du levier (8).

2. Système selon la revendication 1, **caractérisé en ce que** le levier (8) comporte un bras d'activation (83) qui est connecté au boîtier (1) via un ressort.

3. Système selon la revendication 1, **caractérisé en ce que** le bras d'activation (83) du levier (8) est connecté par une transmission mécanique à un levier (12) activable par un opérateur.

4. Système selon la revendication 3, **caractérisé en ce que** la transmission mécanique est un fil gainé (11).
